# EUROPEAN PATENT APPLICATION

(11) **EP 1 905 578 A1**
(43) Date of publication of application: **02.04.2008**
(21) Application number: 07019085.5
(22) Date of filing: 27.09.2007
(51) Int. Cl.: B32B 1/08, B32B 27/34, B32B 27/28

(54) **Multilayer tube**

(30) Priority: 29.09.2006 JP 2006268196
(71) Applicant: NICHIAS CORPORATION, Minato-ku Tokyo 105-8555 (JP); Asahi Glass Company, Limited, Chiyoda-ku Tokyo 100-8405 (JP)
(72) Inventor: Iwahara, Kengo, Yokohama-shi Kanagawa (JP); Fukae, Kouji, Yokohama-shi Kanagawa (JP); Nishi, Eiichi, Tokyo 100-8405 (JP); Kurumisawa, Takeshi, Tokyo 100-8405 (JP)
(74) Representative: Winter, Brandl, Fürniss, Hübner Röss, Kaiser, Polte Partnerschaft Patent- und Rechtsanwaltskanzlei

(57) **Abstract**

To attain a multilayer tube excellent in chemical resistance, gas barrier property, and cleanness, the present invention provides a multilayer tube (1) comprising: a first layer (10) composed of a fluororesin; and a second layer (30) covering one surface of the first layer (10) and composed of a polyamide-based resin free of an additive.

## Description

### BACKGROUND OF THE INVENTION

### Field of the Invention

The present invention relates to a multilayer tube, in particular, a multilayer tube obtained by laminating a layer composed of a fluororesin and a layer composed of a polyamide-based resin.

### Description of the Related Art

A fluororesin is excellent in chemical resistance and corrosion resistance, but is poor in adhesiveness with any other material. Accordingly, for example, a tube composed of a single layer of a fluororesin has been used for transporting a chemical solution in a semiconductor production device. In addition, various attempts have been made to laminate a fluororesin and any other material (for example, JP 59-51421 B, JP 02-54848 B, JP 05-318553 A, JP 07-18035 A, and WO 01/58686).

However, a fluororesin is poor in gas barrier property. As a result, for example, when a chemical solution is circulated in a tube composed of a single layer of the fluororesin in the semiconductor production device, an inconvenience such as a fluctuation in concentration of dissolved oxygen in the chemical solution may occur due to permeation of oxygen into the tube from outside.

In addition, when functional water such as hydrogen water or ozone water is circulated in the tube composed of a single layer of a fluororesin in the semiconductor production device, an inconvenience such as a reduction in concentration of hydrogen or ozone in the functional water may occur due to the permeation of hydrogen or ozone from inside of the tube to the outside of the tube.

In addition, when a large amount of an out-gas is generated from a material other than a fluororesin in a multilayer tube obtained by bonding a layer composed of the fluororesin and a layer composed of the material other than the fluororesin, it cannot be said that the multilayer tube is sufficiently provided with cleanness required in the production of, for example, a semiconductor or liquid crystal display.

### SUMMARY OF THE INVENTION

The present invention has been made in light of the above-mentioned problems, and one of the objects of the present invention is to provide a multilayer tube excellent in chemical resistance, gas barrier property, and cleanness.

To solve the above-mentioned problems, according to an aspect of the present invention, there is provided a multilayer tube comprising: a first layer composed of a fluororesin; and a second layer covering one surface of the first layer and composed of a polyamide-based resin free of an additive. According to the present invention, there can be provided a multilayer tube excellent in chemical resistance, gas barrier property, and cleanness.

Further, according to the aspect of the present invention, in the multilayer tube, the fluororesin may contain at least one selected from the group consisting of a tetrafluoroethylene-perfluoroalkylvinylether copolymer (PFA) having a fluorinated terminal group, an ethylene-tetrafluoroethylene-based copolymer (ETFE), a tetrafluoroethylene-hexafluoropropylene-based copolymer (FEP), and a chlorotrifluoroethylene-tetrafluoroethylene-based copolymer. In this case, the chemical resistance and cleanness of the multilayer tube can be particularly improved.

Further, in the multilayer tube, the polyamide-based resin may contain at least one selected from the group consisting of polyamide 6, polyamide 12, and a polyamide 6/polyamide 12 copolymer. In this case, the gas barrier property and cleanness of the multilayer

Further, in the multilayer tube, the first layer and the second layer may be bonded to each other through an intermediate layer composed of a fluororesin having at least one functional group selected from the group consisting of an acid anhydride group, a carboxy group, an acyl halide group, and a carbonate group. In this case, the first layer and the second layer can be strongly bonded to each other. An acid anhydride group can be preferably used as the functional group. The functional group can be introduced to a fluororesin by using a method of copolymerization of a monomer having the functional group and a fluorine-containing monomer, a method of polymerization of a fluorine-containing monomer by using a chain transfer agent and a polymerization initiator having the functional group, a method of addition of a monomer having the functional group to the fluororesin by graft polymerization. The contained amount of the functional group is preferably 0.01 to 5 mol% and more preferably 0.1 to 1 mol% with respect to a total molar amount of repeating unit constituting the fluororesin.

Further, in the multilayer tube, the fluororesin having an acid anhydride group may be a fluorine-containing copolymer which contains a first repeating unit based on tetrafluoroethylene (hereinafter, may sometimes be referred to as "TFE"), a second repeating unit based on a cyclic hydrocarbon monomer having a dicarboxylic anhydride group and having, in its ring, a polymerizable unsaturated group, and a third repeating unit based on a monomer except TFE and the cyclic hydrocarbon monomer and in which the first repeating unit accounts for 50 to 99.89 mol%, the second repeating unit accounts for 0.01 to 5 mol%, and the third repeating unit accounts for 0.1 to 49.99 mol% with respect to a total molar amount of the first repeating unit, the second repeating unit, and the third repeating unit. In this case, a bonding strength between the first layer and the second layer can be particularly improved.

In addition, the multilayer tube may have an oxygen permeability coefficient of 2.0 x 10⁻¹⁶ mol·m/m²·s·Pa or less. In this case, a multilayer tube particularly excellent in gas barrier property can be provided. In addition, the multilayer tube may generate an out-gas in an amount of 10 µg/g or less by heating at 100°C for 30 minutes. In this case, a multilayer tube particularly excellent in cleanness can be provided. In addition, the multilayer tube may be a cylindrical structure molded by co-extrusion. In this case, a tube for piping excellent in chemical resistance, gas barrier property, and cleanness can be provided.

Further, the multilayer tube may be used for chemical solution piping in a device for producing one of a semiconductor and liquid crystal display. In this case, a tube for piping excellent in chemical resistance, gas barrier property, and cleanness, and suitable for transportation of, for example, functional water or a chemical solution in the production of, for example, a semiconductor or liquid crystal display, can be provided.

### BRIEF DESCRIPTION OF THE DRAWINGS

In the accompanying drawings:
Fig. 1 is a sectional view of a multilayer tube according to an embodiment of the present invention;
Fig. 2 is an explanatory view of a section of a first die;
Fig. 3 is an explanatory view of a section of a second die;
Fig. 4 is an explanatory view of a section of a third die; and
Fig. 5 is an explanatory view for properties of the multilayer tube according to the embodiment of the present invention.

### DESCRIPTION OF THE PREFERRED EMBODIMENTS

Hereinafter, a multilayer tube according to an embodiment of the present invention will be described. In this embodiment, description will be given by taking a multilayer tube for piping to be used in the transportation of a chemical solution in a device for producing, for example, a semiconductor or liquid crystal display, as an example of the multilayer tube according to the present invention.

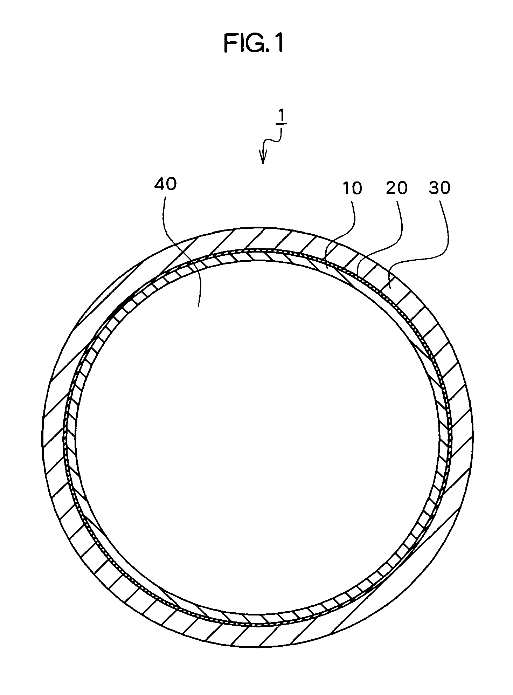

Fig. 1 is a sectional view of a multilayer tube 1 (hereinafter referred to as "tube 1") according to this embodiment. As shown in Fig. 1, the tube 1 is a cylindrical structure having a hollow portion 40 formed at the center in its radial direction, through which a liquid or a gas can be circulated, and the tube has, in the radial direction, an inner layer 10 placed on the innermost side, an intermediate layer 20 covering the outside of the inner layer 10, and an outer layer 30 covering the outside of the inner layer 10 through the intermediate layer 20.

The inner layer 10 is in direct contact with a chemical solution or a gas flowing through the hollow portion 40. In addition, the outer layer 30 is placed on the outermost side of the tube 1 in the radial direction of the tube 1, and is in direct contact with a gas with which an environment where the tube is placed is filled (such as the air) . The intermediate layer 20 adheres to the inner layer 10 on its inner surface in its radial direction, and adheres to the outer layer 30 on its outer surface in the radial direction. That is, the inner layer 10 and the outer layer 30 are bonded to and integrated with each other through the intermediate layer 20.

The inner layer 10 is composed of a fluororesin (hereinafter referred to as "first fluororesin"). A fluororesin that can be subjected to melt extrusion can be preferably used as the first fluororesin of which the inner layer 10 is formed. That is, one selected from the group consisting of, for example, a tetrafluoroethylene-perfluoroalkylvinylether copolymer (PFA) having a fluorinated terminal group (having terminal groups that are fluorinated), a tetrafluoroethylene-hexafluoropropylene copolymer (FEP), a tetrafluoroethylene-ethylene copolymer (ETFE), a chlorotrifluoroethylene (CTFE)-tetrafluoroethylene (TFE) copolymer, and a chlorotrifluoroethylene (CTFE)-tetrafluoroethylene (TFE)-perfluoroalkylvinylether copolymer can be preferably used alone, a laminate of two or more of them can be preferably used, or a blend of two or more of them can be preferably used. Of those, at least one of the PFA, the ETFE, and the FEP can be preferably used, and a PFA having a fluorinated terminal group having excellent chemical resistance, heat resistance, cleanness, and purity can be particularly preferably used.

In addition, the first fluororesin such as the PFA, having polymerization ratio of monomers constituting the first fluororesin and terminal groups adjusted in order for the first fluororesin to be provided with desired properties (such as chemical resistance, cleanness, a melting point, rigidity, and stretching property) can be appropriately used.

The intermediate layer 20 is composed of a fluororesin having at least one functional group selected from the group consisting of an acid anhydride group, a carboxy group, an acyl halide group, and a carbonate group (hereinafter referred to as "second fluororesin"). The second fluororesin of which the intermediate layer 20 is formed is obtained by incorporating at least one functional group selected from the group consisting of an acid anhydride group, a carboxy group, an acyl halide group, and a carbonate group into a fluororesin (hereinafter referred to as "base fluororesin"). As a result, the adhesive property of the second fluororesin to the inner layer 10 and the outer layer 30 is improved compared to that of the base fluororesin. An acid anhydride group can be preferably used as the functional group.

For example, a fluororesin containing a repeating unit based on tetrafluoroethylene can be preferably used as the base fluororesin of which the second fluororesin is constituted. To be specific, one selected from the group consisting of, for example, PFA, FEP, ETFE, and CTFE-TFE copolymers can be preferably used alone as the base fluororesin, or a blend of two or more of them can be preferably used as the resin. The PFA can be particularly preferably used as the resin. In addition, the same fluororesin as the first fluororesin used in the inner layer 10 can be preferably used as the base fluororesin. That is, for example, when the PFA is used as the first fluororesin, a PFA having at least one functional group selected from the group consisting of an acid anhydride group, a carboxy group, an acyl halide group, and a carbonate group can be preferably used as the second fluororesin. PFA having an acid anhydride group can be more preferably used as the second fluororesin.

In addition, an unsaturated carboxylic anhydride group can be preferably used as the acid anhydride group to be incorporated into the second fluororesin, and a dicarboxylic anhydride group can be particularly preferably used as the group. Of those, a dicarboxylic anhydride group bonded to a cyclic hydrocarbon can be preferably used as the group.

In addition, a repeating unit based on a cyclic hydrocarbon monomer having a polymerizable unsaturated group and a dicarboxylic anhydride group in its ring (hereinafter referred to as "cyclic monomer") can be preferably used as the acid anhydride group. In this case, for example, a resin having a first repeating unit based on tetrafluoroethylene, a second repeating unit based on a cyclic hydrocarbon monomer having a dicarboxylic anhydride group and having, in its ring, a polymerizable unsaturated group, and a third repeating unit based on a monomer except tetrafluoroethylene and the cyclic hydrocarbon monomer (hereinafter referred to as "additional monomer") can be preferably used as the second fluororesin.

In addition, a resin in which the first repeating unit accounts for 50 to 99.89 mol%, the second repeating unit accounts for 0.01 to 5 mol%, and the third repeating unit accounts for 0.1 to 49.99 mol% with respect to the total molar amount of the first repeating unit, the second repeating unit, and the third repeating unit can be preferably used as the second fluororesin. When the contents (mol%) of the first repeating unit, the second repeating unit, and the third repeating unit fall within the above ranges respectively, the second fluororesin is excellent in heat resistance, chemical resistance, adhesiveness (adhesive property), moldability, and mechanical physical properties. Further, a resin in which the first repeating unit accounts for 60 to 99.45 mol%, the second repeating unit accounts for 0.05 to 3 mol%, and the third repeating unit accounts for 0.5 to 39.95 mol% is more preferably used as the second fluororesin, and a resin in which the first repeating unit accounts for 80 to 98.9 mol%, the second repeating unit accounts for 0.1 to 1 mol%, and the third repeating unit accounts for 1 to 19.9 mol% is most preferably used as the second fluororesin.

The cyclic monomer of which the second fluororesin is constituted is preferably a polymerizable compound having one or more five- or six-membered cyclic hydrocarbons, a dicarboxylic anhydride group, and an endocyclic polymerizable unsaturated group. A monomer having a cyclic hydrocarbon having one or more bridged polycyclic hydrocarbons can be preferably used as the cyclic monomer, and a monomer having a cyclic hydrocarbon composed of one bridged polycyclic hydrocarbon, a cyclic hydrocarbon formed as a result of the condensation of two or more bridged polycyclic hydrocarbons, or a cyclic hydrocarbon formed as a result of the condensation of a bridged polycyclic hydrocarbon and any other cyclic hydrocarbon can be particularly preferably used as the cyclic monomer. In addition, a monomer having an endocyclic polymerizable unsaturated group containing one or more polymerizable unsaturated groups present between carbon atoms of which a hydrocarbon ring is constituted can be preferably used as the cyclic monomer. In addition, a monomer having a dicarboxylic anhydride group (-CO-O-CO-) bonded to two carbon atoms of which a hydrocarbon ring of the monomer is constituted, or to two carbon atoms outside the ring, can be preferably used as the cyclic monomer.

To be specific, for example, 5-norbornene-2,3-dicarboxylic anhydride (hereinafter referred to as "NAH"), or an acid anhydride represented by any one of the following formulae (1) to (3) can be preferably used as the cyclic monomer, and NAH can be particularly preferably used as the monomer. It should be noted that the second fluororesin containing a repeating unit composed of the above-mentioned cyclic monomer can be easily produced by using the cyclic monomer without employing any special polymerization method.

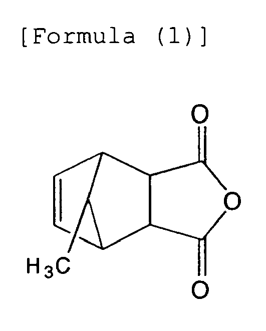

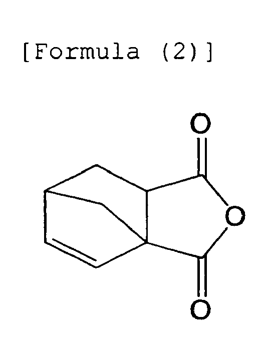

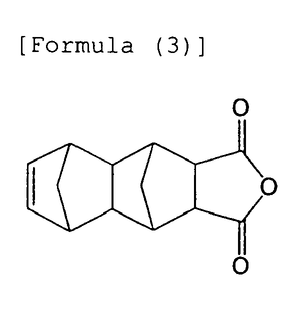

One selected from the group consisting of, for example, vinyl fluoride, vinylidene fluoride (hereinafter referred to as "VdF"), chlorotrifluoroethylene (hereinafter referred to as "CTFE"), trifluoroethylene, hexafluoropropylene (hereinafter referred to as "HFP"), CF₂=CFOR^{f1} (where R^{f1} represents a perfluoroalkyl group which has 1 to 10 carbon atoms and which may contain an oxygen atom between two arbitrary adjacent carbon atoms) as a perfluoroalkylvinylether, CF₂=CFOR^{f2}SO₂X¹ (where R^{f2} represents a perfluoroalkylene group which has 1 to 10 carbon atoms and which may contain an oxygen atom between two arbitrary adjacent carbon atoms, and X¹ represents a halogen atom or a hydroxyl group), CF₂=CFOR^{f2}CO₂X² (where R^{f2} represents a perfluoroalkylene group which has 1 to 10 carbon atoms and which may contain an oxygen atom between two arbitrary adjacent carbon atoms, and X² represents a hydrogen atom or an alkyl group having 1 to 3 carbon atoms), CF₂=CF(CF₂)ₚOCF=CF₂ (where p represents 1 or 2), CH₂=CX³(CF₂)_{q}X⁴ (where X³ and X⁴ each independently represent a hydrogen atom or a fluorine atom, and q represents an integer of 2 to 10), perfluoro(2-methylene-4-methyl-1,3-dioxolane), perfluoro(2,2-dimethyl-1,3-dioxole), perfluoro(4 - methoxy-1,3-dioxole) and an olefin having 2 to 4 carbon atoms such as ethylene, propylene, or isobutene can be used alone as the additional monomer of which the second fluororesin is constituted, or two or more of them can be used in combination as the monomer.

To be specific, a monomer containing one or more selected from the group consisting of, for example, VdF, HFP, CTFE, CF₂=CFOR^{f1}, CH₂=CX³(CF₂)_{q}X⁴, and ethylene can be used as the additional monomer, a monomer containing one or more selected from the group consisting of HFP, CTFE, CF₂=CFOR^{f1}, ethylene, and CH₂=CX³(CF₂)_{q}X⁴ can be preferably used as the monomer, and HFP, CTFE, or CF₂=CFOR^{f1} can be particularly preferably used as the monomer. In addition, CF₂=CFOR^{f1} is most preferably used as the additional monomer. In this case, R^{f1} preferably represents a perfluoroalkyl group having 1 to 6 carbon atoms, more preferably represents a perfluoroalkyl group having 2 to 4 carbon atoms, or most preferably represents a perfluoropropyl group.

In addition, a resin having a melting point in the range of 150 to 320°C can be preferably used as the second fluororesin, and a resin having a melting point in the range of 200 to 310°C can be particularly preferably used as the resin. The second fluororesin having a melting point in such a range is particularly excellent in moldability in melt co-extrusion. It should be noted that the melting point of the second fluororesin can be appropriately adjusted depending on the content of each repeating unit in the second fluororesin.

In addition, a fluororesin in which the first repeating unit based on TFE accounts for 50 to 99.89 mol%, the second repeating unit accounts for 0.01 to 5 mol%, and the third repeating unit based on CTFE accounts for 0.1 to 49.99 mol% is preferably used as the second fluororesin because the gas barrier property of the intermediate layer 20 is improved.

The outer layer 30 is composed of a polyamide-based resin free of an additive (containing no additive). The additive is a plasticizer to be used for the purpose of, for example, imparting flexibility to a polyamide-based resin after molding, or an age resistor to be used for the purpose of, for example, preventing deterioration of the polyamide-based resin due to ozone or the like. Examples of the plasticizer include N-butylbenzenesulfonamide and p-toluenesulfonamide. An example of the age resistor is di-t-butylphenol. The addition of any such additive to a polyamide-based resin can improve the moldability of the polyamide-based resin, and can prevent the deterioration of the resin, but the additive may be responsible for the out-gas of a molded compact composed of the polyamide-based resin. An aliphatic polyamide-based resin or aromatic polyamide-based resin having more excellent gas barrier property (lower gas permeability) than that of each of the first fluororesin to be used in the inner layer 10 and the second fluororesin to be used in the intermediate layer 20 can be preferably used as the polyamide-based resin of which the outer layer 30 is formed. That is, one selected from the group consisting of, for example, polyamide 12, polyamide 6, polyamide 66, polyamide 46, polyamide 11, polyamide MXD6 (semi-aromatic polyamide), polyamide 26, polyamide 69, polyamide 610, polyamide 611, polyamide 612, polyamide 6T, polyamide 6I, polyamide 912, polyamide 1012, polyamide 1212, and polyamide PACM12 can be used alone, or a blend of two or more of them can be used; a copolymer containing two or more selected from the group as monomers can be preferably used. To be specific, for example, polyamide 12, polyamide 6, or a polyamide 6/polyamide 12 copolymer can be preferably used as the polyamide-based resin. In addition, when the polyamide 6/polyamide 12 copolymer is used as the polyamide-based resin, the copolymer to be used preferably has a relatively high content of polyamide 6 in terms of gas barrier property. For example, a copolymer having a molar ratio (polymerization ratio) between polyamide 6 and polyamide 12 in the range of 7 : 3 to 9 : 1 can be preferably used.

In addition, in the tube 1, the inner layer 10 preferably has a thickness in the range of 50 to 400 µm, the intermediate layer 20 preferably has a thickness in the range of 50 to 400 µm, and the outer layer 30 preferably has a thickness in the range of 100 to 900 µm. When the thickness of the inner layer 10 falls within the above-mentioned range, the inner layer 10 can be provided with preferable chemical resistance and preferable corrosion resistance. When the thickness of the intermediate layer 20 falls within the above-mentioned range, the intermediate layer can be provided with preferable adhesiveness. When the thickness of the outer layer 30 falls within the above-mentioned range, the outer layer 30 can be provided with preferable gas barrier property. When the thicknesses of the inner layer 10, the intermediate layer 20, and the outer layer 30 fall within the above-mentioned ranges respectively, the tube 1 can be provided with preferable flexibility as well as chemical resistance, gas barrier property, and cleanness.

In addition, the tube 1 can be preferably molded by subjecting the first fluororesin, the second fluororesin, and the polyamide-based resin free of an additive to co-extrusion. The co-extrusion molding of the tube 1 is preferably performed by melting the first fluororesin and the polyamide-based resin at desired temperatures different from each other to maintain each of the moldability of the first fluororesin and the moldability of the polyamide-based resin at a good level.

That is, for example, in a multilayer die for co-extrusion, the first fluororesin is melted by heating in order that the temperature of the first fluororesin may be a predetermined first temperature (for example, the temperature at which the first fluororesin in a molten state can flow through a flow path in the die while maintaining good moldability), and the polyamide-based resin is melted by heating in order that the temperature of the polyamide-based resin may be a predetermined second temperature (for example, the temperature at which the polyamide-based resin in a molten state can flow through a flow path in the die while maintaining good moldability). In this case, the first temperature can be predetermined as a temperature higher than the melting point of the first fluororesin by a temperature in a predetermined range (for example, 50 to 70°C). In addition, the second temperature can be predetermined as a temperature lower than the first temperature and higher than the melting point of the polyamide-based resin by a temperature in a predetermined range (for example, 60 to 160°C).

In addition, a die provided with a first heater for heating the first fluororesin in the die and a second heater for heating the polyamide-based resin in the die which are independent of each other can be preferably used as the die to be used in the co-extrusion molding of the tube 1.

That is, a die provided with a first flow path through which the first fluororesin flows, a second flow path through which the second fluororesin flows, a third flow path through which the polyamide-based resin flows, a first heater for heating the first fluororesin in the first flow path to a predetermined first temperature, and a second heater for heating the polyamide-based resin in the third flow path to a predetermined second temperature lower than the first temperature, can be preferably used.

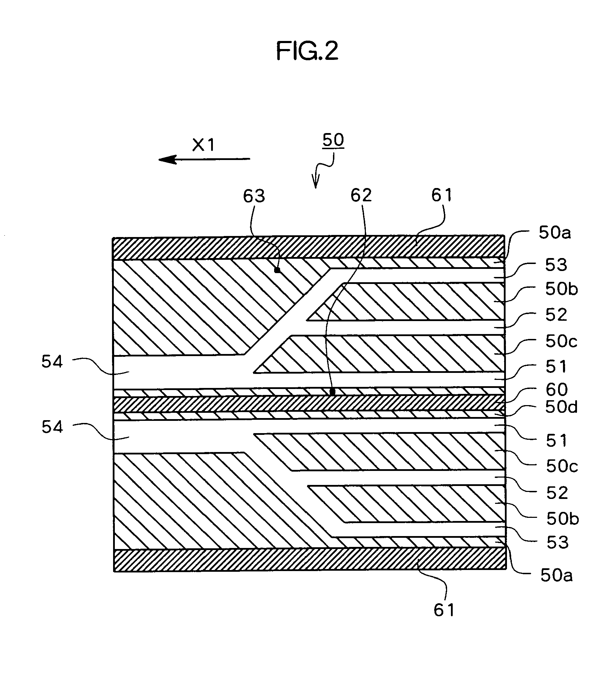

Fig. 2 shows a section of an example of such a die. A die 50 (hereinafter referred to as "first die 50") shown in Fig. 2 has: an outer die 50a; an intermediate die 50b fitted to an inner side of the outer die 50a in the radial direction of the outer die 50a; an inner die 50c fitted to an inner side of the intermediate die 50b in the radial direction of the intermediate die 50b; and a mandrel 50d fitted to an inner side of the inner die 50c in the radial direction of the inner die 50c (that is, the central portion of the first die 50 in the radial direction).

In the first die 50, a cylindrical inner layer flow path 51 is formed between the mandrel 50d and the inner die 50c, a cylindrical intermediate layer flow path 52 is formed between the inner die 50c and the intermediate die 50b outside the inner layer flow path 51 in the radial direction of the inner layer flow path 51, and a cylindrical outer layer flow path 53 is formed between the intermediate die 50b and the outer die 50a outside the intermediate layer flow path 52 in the radial direction of the intermediate layer flow path 52. The inner layer flow path 51, the intermediate layer flow path 52, and the outer layer flow path 53 extend by predetermined lengths substantially in parallel with one another in an extrusion direction X1 (direction X1 indicated by an arrow shown in Fig. 2), and are then gathered and merged toward the center of the first die 50 in the radial direction of the first die 50. One merging flow path 54 is formed on a downstream side from the merging point. The merging flow path 54 opens to the downstream end of the first die 50 in the extrusion direction X1.

In addition, the first die 50 has: a heater 60 (hereinafter referred to as "internal heater 60") placed inside the inner layer flow path 51 in the radial direction of the inner layer flow path 51; and a heater 61 (hereinafter referred to as "external heater 61") placed outside the outer layer flow path 53 in the radial direction of the outer layer flow path 53. The internal heater 60 is fitted into the mandrel 50d, and is placed along the inner layer flow path 51 and the merging flow path 54. The external heater 61 covers the outside of the outer die 50a in the radial direction of the outer die 50a (that is, the outer surface of the first die 50 in the radial direction of the first die 50), is placed along a portion of the outer layer flow path 53 extending substantially in parallel with the intermediate layer flow path 52 and the inner layer flow path 51, and extends toward the outside of the merging flow path 54 in the radial direction of the merging flow path 54. That is, the internal heater 60 and the external heater 61 are placed so as to sandwich the inner layer flow path 51, the intermediate layer flow path 52, the outer layer flow path 53, and the merging flow path 54 from the inside and outside of the flow paths in the radial direction of the flow paths.

In addition, a temperature which the mandrel 50d reaches as a result of heating by the internal heater 60 and a temperature which the outer die 50a reaches as a result of heating by the external heater 61 can be set so as to be independent of each other. That is, in the first die 50, the mandrel 50d and the outer die 50a can be heated to temperatures that are different from each other by the internal heater 60 and the external heater 61, respectively.

In addition, the first die 50 has: a temperature sensor 62 (hereinafter referred to as "internal sensor 62") placed at a portion of the mandrel 50d close to the internal heater 60; and a temperature sensor 63 (hereinafter referred to as "external sensor 63") placed at a portion of the outer die 50a close to the external heater 61. The internal sensor 62 and the external sensor 63 can independently measure the temperature of the mandrel 50d and the temperature of the outer die 50a. In addition, a result of measurement with the internal sensor 62 and a result of measurement with the external sensor 63 can be fed back to the internal heater 60 and the external heater 61, respectively. As a result, the internal heater 60 and the external heater 61 can heat the mandrel 50d and the outer die 50a on the basis of the results of temperature measurement with the internal sensor 62 and the external sensor 63 so that that the mandrel 50d and the outer die 50a can be maintained at desired temperatures that are different from each other.

In addition, upon molding of the tube 1, in the first die 50, the first fluororesin, the second fluororesin, and the polyamide-based resin each in a molten state are caused to flow through the inner layer flow path 51, the intermediate layer flow path 52, and the outer layer flow path 53, respectively, and the first fluororesin, the second fluororesin, and the polyamide-based resin are laminated in the merging flow path 54 to be subjected to co-extrusion. As a result, the tube 1 having three layers, that is, the inner layer 10 composed of the first fluororesin, the intermediate layer 20 composed of the second fluororesin, and the outer layer 30 composed of the polyamide-based resin can be molded.

In this case, the first fluororesin in the inner layer flow path 51 is heated by the internal heater 60 to a predetermined first temperature higher than the melting point of the first fluororesin, and the polyamide-based resin in the outer layer flow path 53 is heated by the external heater 61 to a predetermined second temperature lower than the first temperature and higher than the melting point of the polyamide-based resin. As a result, each of the moldability of the first fluororesin and the moldability of the polyamide-based resin in co-extrusion can be maintained at a good level.

In addition, a die provided with a first flow path through which the first fluororesin flows, a second flow path through which the second fluororesin flows, a third flow path through which the polyamide-based resin flows, a first heater for heating the first fluororesin in the first flow path to a predetermined first temperature, a second heater for heating the second fluororesin in the second flow path to a predetermined second temperature, and a third heater for heating the polyamide-based resin in the third flow path to a predetermined third temperature lower than the first temperature and the second temperature can be preferably used as a die to be used in the co-extrusion molding of the tube 1.

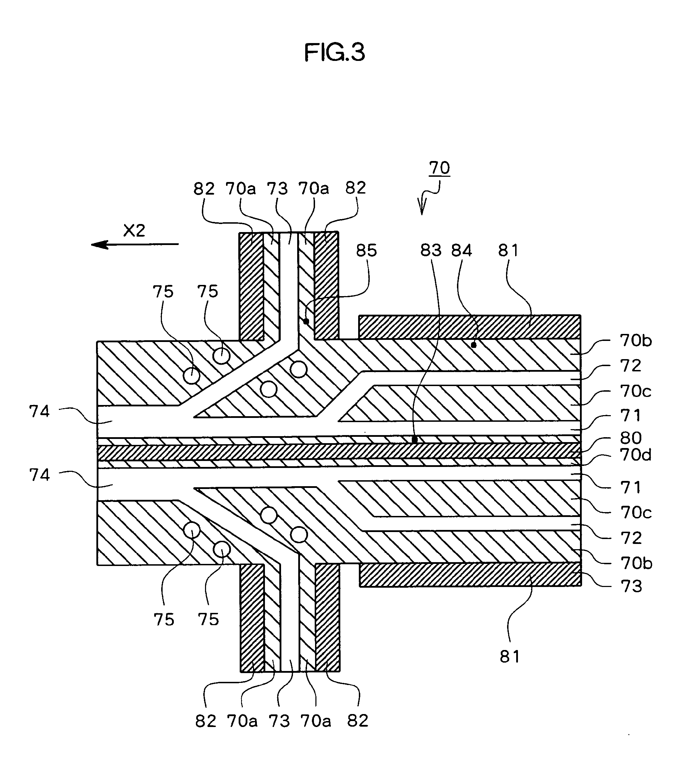

Fig. 3 shows a section of an example of such a die. A die 70 (hereinafter referred to as "second die 70") shown in Fig. 3 has: an outer die 70b; an inner die 70c fitted to an inner side of the outer die 70b in the radial direction of the outer die 70b; a mandrel 70d fitted to an inner side of the inner die 70c in the radial direction of the inner die 70c (that is, the central portion of the second die 70); and an outer layer die 70a extending substantially perpendicular to an extrusion direction X2 of the second die 70 (direction X2 indicated by an arrow shown in Fig. 3) outside the outer die 70b in the radial direction of the outer die 70b.

In the second die 70, a cylindrical inner layer flow path 71 is formed between the mandrel 70d and the inner die 70c, a cylindrical intermediate layer flow path 72 is formed between the inner die 70c and the outer die 70b outside the inner layer flow path 71 in the radial direction of the inner layer flow path 71, and an outer layer flow path 73 extending from the outside to the inside in the radial direction of the second die 70 is formed inside the outer layer die 70a. The inner layer flow path 71 and the intermediate layer flow path 72 extend by predetermined lengths substantially in parallel with each other in the extrusion direction X2, and are then gathered and merged toward the center of the second die 70 in the radial direction of the second die 70. In addition, the resultant flow path further merges with the outer layer flow path 73 on its downstream side. One merging flow path 74 is formed on a downstream side from the merging point. The merging flow path 74 opens to the downstream end of the second die 70 in the extrusion direction X2.

In addition, the second die 70 has: a heater 80 (hereinafter referred to as "internal heater 80") placed on an inner side of the inner layer flow path 71 in the radial direction of the inner layer flow path 71; a heater 81 (hereinafter referred to as "external heater 81") placed outside the intermediate layer flow path 72 in the radial direction of the intermediate layer flow path 72; and a heater 82 (hereinafter referred to as "outer layer heater 82") placed so as to cover a portion of the outer layer flow path 73 extending in the direction substantially perpendicular to the extrusion direction X2. The internal heater 80 is fitted into the mandrel 70d, and is placed along the inner layer flow path 71 and the merging flow path 74. The external heater 81 covers the outside of the outer die 70b in the radial direction of the outer die 70b, and is placed along a portion of the intermediate layer flow path 72 extending substantially in parallel with the inner layer flow path 71. The outer layer heater 82 is placed to cover the outer layer die 70a.

In addition, a temperature which the mandrel 70d reaches as a result of heating by the internal heater 80, a temperature which the outer die 70b reaches as a result of heating by the external heater 81, and a temperature which the outer layer die 70a reaches as a result of heating by the outer layer heater 82 can be set so as to be independent of one another. That is, in the second die 70, the mandrel 70d, the outer die 70b, and the outer layer die 70a can be heated to temperatures that are different from one another by the internal heater 80, the external heater 81, and the outer layer heater 82, respectively.

In addition, the second die 70 has: a temperature sensor 83 (hereinafter referred to as "internal sensor 83") placed at a portion of the mandrel 70d close to the internal heater 80; a temperature sensor 84 (hereinafter referred to as "external sensor 84") placed at a portion of the outer die 70b close to the external heater 81; and a temperature sensor 85 (hereinafter referred to as "outer layer sensor 85") placed at a portion of the outer layer die 70a close to the outer layer heater 82. The internal sensor 83, the external sensor 84, and the outer layer sensor 85 can independently measure the temperature of the mandrel 70d, the temperature of the outer die 70b, and the temperature of the outer layer die 70a. In addition, a result of measurement with the internal sensor 83, a result of measurement with the external sensor 84, and a result of measurement with the outer layer sensor 85 can be fed back to the internal heater 80, the external heater 81, and the outer layer heater 82, respectively. As a result, the internal heater 80, the external heater 81, and the outer layer heater 82 can heat the mandrel 70d, the outer die 70b, and the outer layer die 70a to desired temperatures different from one another on the basis of the results of temperature measurement with the internal sensor 83, the external sensor 84, and the outer layer sensor 85.

In addition, upon molding of the tube 1, in the second die 70, the first fluororesin, the second fluororesin, and the polyamide-based resin, each in a molten state, are caused to flow through the inner layer flow path 71, the intermediate layer flow path 72, respectively, and the outer layer flow path 73, and the first fluororesin, the second fluororesin, and the polyamide-based resin are laminated in the merging flow path 74 to be subjected to co-extrusion. As a result, the tube 1 having three layers, that is, the inner layer 10 composed of the first fluororesin, the intermediate layer 20 composed of the second fluororesin, and the outer layer 30 composed of the polyamide-based resin can be molded.

In this case, the first fluororesin in the inner layer flow path 71 is heated with the internal heater 80 to a predetermined first temperature higher than the melting point of the first fluororesin, the second fluororesin in the intermediate layer flow path 72 is heated with the external heater 81 to a predetermined second temperature higher than the melting point of the second fluororesin, and the polyamide-based resin in the outer layer flow path 73 is heated with the outer layer heater 82 to a predetermined third temperature lower than the first temperature and the second temperature, and higher than the melting point of the polyamide-based resin. As a result, each of the moldability of the first fluororesin, the moldability of the second fluororesin, and the moldability of the polyamide-based resin in co-extrusion molding can be maintained at a good level.

In addition, the outer layer heater 82 is not placed at a downstream portion of the outer layer flow path 73 in the second die 70 (portion slightly upstream of the merging point of the outer layer flow path 73 and the merging flow path 74), and a cooling path 75 for cooling the polyamide-based resin flowing through the outer layer flow path 73 is formed in the downstream portion. As a result, the polyamide-based resin is heated with the outer layer heater 82 to the third temperature on the upstream side of the outer layer flow path 73 and cooled with a coolant (a gas or a liquid) flowing in the cooling path 75 before the resin flows into the merging flow path 74 to be laminated on the first fluororesin and the second fluororesin.

In addition, a temperature in the range of 230°C to 380°C can be preferably adopted as the temperature to which raw material resins are heated on the upstream of the die with a screw cylinder for melting the resins in an extruder to be used in such co-extrusion molding. In addition, the die to be coupled to the downstream of the screw cylinder is heated to a temperature in the range of preferably 280°C to 370°C, or more preferably 300 to 350°C. In addition, in the die, the flow path through which the first fluororesin flows is preferably heated to a temperature higher than the temperature to which the flow path through which the polyamide-based resin flows is heated, by 15°C or higher in terms of a difference in melting point between the first fluororesin and the polyamide-based resin. In addition, the number of revolutions of a screw of the screw cylinder, which can be appropriately set depending on a purpose, can preferably adopt, for example, a value in the range of 1 to 25 revolutions/min. It should be noted that, for example, a heater capable of heating any such die by the heat generation of a metal can be preferably used as a heater to be used in the die, and a nichrome wire heater can be particularly preferably used.

Next, specific examples of the tube 1 will be described.

### [Production of second fluororesin]

The second fluororesin was produced by using NAH (high-mix anhydride, manufactured by Hitachi Chemical Co., Ltd.) as a monomer having an acid anhydride group and CF₂=CFO(CF₂)₃F (perfluoropropylvinylether, manufactured by ASAHI GLASS CO., LTD.) (hereinafter referred to as "PPVE") as an additional monomer.

First, 369 kg of 1,3-dichloro-1,1,2,2,3-pentafluoropropane (AK 225cb, manufactured by ASAHI GLASS CO., LTD.) (hereinafter referred to as "AK 225cb") and 30 kg of PPVE were introduced to a polymerization tank with a stirrer deaerated in advance and having an internal volume of 430 L. Next, the inside of the polymerization tank was heated so that its temperature was increased to 50°C. Further, 50 kg of TFE were introduced to the tank, and then the pressure in the polymerization tank was increased to 0.89 MPa/G.

Further, a polymerization initiator solution was prepared by dissolving (perfluorobutyryl) peroxide in AK 225cb at a concentration of 0.36 mass%, and polymerization was performed while 3 L of the solution were continuously added to the polymerization tank at a rate of 6.25 ml/min. In addition, TFE was continuously introduced in order to keep the pressure in the polymerization tank during a polymerization reaction at 0.89 MPa/G. In addition, a solution prepared by dissolving NAH in AK 225cb at a concentration of 0.3 mass% was continuously charged in an amount corresponding to 0.1 mol% of the number of moles of TFE to be introduced during the polymerization.

8 hours after the initiation of the polymerization, at the time when 32 kg of TFE were introduced, the temperature in the polymerization tank was reduced to room temperature, and the pressure in the tank was purged to normal pressure. After having been subjected to solid-liquid separation from AK 225cb, the resultant slurry was dried at 150°C for 15 hours, whereby 33 kg of the second fluororesin (hereinafter referred to as "adhesive PFA") were obtained.

The results of melt NMR analysis and infrared absorption spectral analysis confirmed that the adhesive PFA had a copolymerization composition "repeating unit based on TFE (first repeating unit)/repeating unit based on NAH (second repeating unit)/repeating unit based on PPVE (third repeating unit)" of 97.9/0.1/2.0 (mol%). In addition, the adhesive PFA had a melting point of 300°C and a melt flow rate (MFR) of 0.39 mm³/sec measured at372°C under 5kgf load according to ASTM D3307.

### [Example 1]

In Example 1, a PFA having a melting point of 284 °C (940HP-Plus, manufactured by DU PONT MITSUI FLUOROCHEMICALS) (hereinafter referred to as "first PFA") was used as the first fluororesin of which the inner layer 10 was formed, the adhesive PFA produced as described above was used as the second fluororesin of which the intermediate layer 20 was formed, and polyamide 12 having a melting point of 176°C and free of any additive (3030U, manufactured by UBE INDUSTRIES, LTD.) (hereinafter referred to as "first polyamide 12") was used as the polyamide-based resin of which the outer layer 30 was formed.

In addition, in Example 1, the first die 50 shown in Fig. 2 was used. That is, first, the pellet of the first PFA was supplied to a cylinder in communication with the inner layer flow path 51 of a three-layer extruder provided with the first die 50, the pellet of the adhesive PFA was supplied to a cylinder in communication with the intermediate layer flow path 52 of the extruder, and the pellet of the first polyamide 12 was supplied to a cylinder in communication with the outer layer flow path 53 of the extruder. The temperatures of the first PFA, the adhesive PFA, and the first polyamide 12 in the transportation zone of the extruder ranging from the cylinders to the first die 50 were maintained at 370°C, 340°C, and 230°C, respectively.

Next, the mandrel 50d and the outer die 50a were independently heated with the internal heater 60 and the external heater 61 so that the temperature of the mandrel 50d to be measured with the internal sensor 62 was 350°C, and the temperature of the outer die 50a to be measured with the external sensor 63 was 330°C.

Then, the first PFA, the adhesive PFA, and the first polyamide 12 each in a molten state were merged in the merging flow path 54. After that, the merged product was extruded from the first die 50, whereby the tube 1 composed of three layers, that is, the inner layer 10, the intermediate layer 20, and the outer layer 30 (hereinafter referred to as "tube A1") was molded. The inner diameter of the tube A1 (that is, the diameter of the hollow portion 40) was 6 mm, and the thickness of the inner layer 10, the thickness of the intermediate layer 20, and the thickness of the outer layer 30 were 0.3 mm, 0.1 mm, and 0.7 mm, respectively.

### [Example 2]

In Example 2, the first PFA was used as the first fluororesin, the adhesive PFA was used as the second fluororesin, and the first polyamide 12 was used as the polyamide-based resin as in the case of Example 1.

In addition, in Example 2, the second die 70 shown in Fig. 3 was used. That is, first, the pellet of the first PFA was supplied to a cylinder in communication with the inner layer flow path 71 of a three-layer extruder provided with the second die 70, the pellet of the adhesive PFA was supplied to a cylinder in communication with the intermediate layer flow path 72 of the extruder, and the pellet of the first polyamide 12 was supplied to a cylinder in communication with the outer layer flow path 73 of the extruder. The temperatures of the first PFA, the adhesive PFA, and the first polyamide 12 in the transportation zone of the extruder ranging from the cylinders to the second die 70 were maintained at 370°C, 340°C, and 230°C, respectively.

Next, the mandrel 70d and the outer die 70a were independently heated with the internal heater 80 and the outer layer heater 82 so that the temperature of the mandrel 70d to be measured with the internal sensor 83 was 350°C, and the temperature of the outer die 70a to be measured with the outer layer sensor 85 was 300°C.

Then, the first PFA, the adhesive PFA, and the first polyamide 12, each in a molten state, were merged in the merging flow path 74. After that, the merged product was extruded from the second die 70, whereby the tube 1 composed of three layers, that is, the inner layer 10, the intermediate layer 20, and the outer layer 30 (hereinafter referred to as "tube A2") was molded. The inner diameter of the tube A2 was 6 mm, and the thickness of the inner layer 10, the thickness of the intermediate layer 20, and the thickness of the outer layer 30 were 0.3 mm, 0.1 mm, and 0.7 mm, respectively.

### [Example 3]

In Example 3, the first PFA was used as the first fluororesin, the adhesive PFA was used as the second fluororesin, and polyamide 6 having a melting point of 215°C and free of any additive (1030B, manufactured by UBE INDUSTRIES, LTD.) was used as the polyamide-based resin.

In addition, in Example 3, the second die 70 was used. That is, first, the pellet of the first PFA was supplied to a cylinder in communication with the inner layer flow path 71 of a three-layer extruder provided with the second die 70, the pellet of the adhesive PFA was supplied to a cylinder in communication with the intermediate layer flow path 72 of the extruder, and the pellet of the polyamide 6 was supplied to a cylinder in communication with the outer layer flow path 73 of the extruder. The temperatures of the first PFA, the adhesive PFA, and the polyamide 6 in the transportation zone of the extruder were maintained at 370°C, 340°C, and 260°C, respectively.

Next, the mandrel 70d and the outer die 70a were independently heated with the internal heater 80 and the outer layer heater 82 so that the temperature of the mandrel 70d to be measured with the internal sensor 83 was 350°C, and the temperature of the outer die 70a to be measured with the outer layer sensor 85 was 310°C.

Then, the first PFA, the adhesive PFA, and the polyamide 6, each in a molten state, were merged in the merging flow path 74. After that, the merged product was extruded from the second die 70, whereby the tube 1 composed of three layers, that is, the inner layer 10, the intermediate layer 20, and the outer layer 30 (hereinafter referred to as "tube A3") was molded. The inner diameter of the tube A3 was 6 mm, and the thickness of the inner layer 10, the thickness of the intermediate layer 20, and the thickness of the outer layer 30 were 0.3 mm, 0.1 mm, and 0.7 mm, respectively.

### [Example 4]

In Example 4, the first PFA was used as the first fluororesin, the adhesive PFA was used as the second fluororesin, and a polyamide 6/12 copolymer having a melting point of 200°C and free of any additive (7034B, manufactured by UBE INDUSTRIES, LTD.) was used as the polyamide-based resin. A molar ratio (polymerization ratio) between polyamide 6 and polyamide 12 in the polyamide 6/12 copolymer was 8 : 2.

In addition, in Example 4, the second die 70 was used. That is, first, the pellet of the first PFA was supplied to a cylinder in communication with the inner layer flow path 71 of a three-layer extruder provided with the second die 70, the pellet of the adhesive PFA was supplied to a cylinder in communication with the intermediate layer flow path 72 of the extruder, and the pellet of the polyamide 6/12 copolymer was supplied to a cylinder in communication with the outer layer flow path 73 of the extruder. The temperatures of the first PFA, the adhesive PFA, and the polyamide 6/12 copolymer in the transportation zone of the extruder were maintained at 370°C, 340°C, and 250°C, respectively.

Next, the mandrel 70d and the outer die 70a were independently heated with the internal heater 80 and the outer layer heater 82 so that the temperature of the mandrel 70d to be measured with the internal sensor 83 was 350°C, and the temperature of the outer die 70a to be measured with the outer layer sensor 85 was 310°C.

Then, the first PFA, the adhesive PFA, and the polyamide 6/12 copolymer, each in a molten state, were merged in the merging flow path 74. After that, the merged product was extruded from the second die 70, whereby the tube 1 composed of three layers, that is, the inner layer 10, the intermediate layer 20, and the outer layer 30 (hereinafter referred to as "tube A4") was molded. The inner diameter of the tube A4 was 6 mm, and the thickness of the inner layer 10, the thickness of the intermediate layer 20, and the thickness of the outer layer 30 were 0.3 mm, 0.1 mm, and 0.7 mm, respectively.

### [Example 5]

In Example 5, a PFA having a melting point of 308°C (451 HP-J, manufactured by DU PONT MITSUI FLUOROCHEMICALS) (hereinafter referred to as "second PFA") was used as the first fluororesin, the adhesive PFA was used as the second fluororesin, and polyamide 6 was used as the polyamide-based resin.

In addition, in Example 5, the second die 70 was used. That is, first, the pellet of the second PFA was supplied to a cylinder in communication with the inner layer flow path 71 of a three-layer extruder provided with the second die 70, the pellet of the adhesive PFA was supplied to a cylinder in communication with the intermediate layer flow path 72 of the extruder, and the pellet of the polyamide 6 was supplied to a cylinder in communication with the outer layer flow path 73 of the extruder. The temperatures of the second PFA, the adhesive PFA, and the polyamide 6 in the transportation zone of the extruder were maintained at 380°C, 340°C, and 260°C, respectively.

Next, the mandrel 70d and the outer die 70a were independently heated with the internal heater 80 and the outer layer heater 82 so that the temperature of the mandrel 70d to be measured with the internal sensor 83 was 370°C, and the temperature of the outer die 70a to be measured with the outer layer sensor 85 was 310°C.

Then, the second PFA, the adhesive PFA, and polyamide 6 each in a molten state were merged in the merging flow path 74. After that, the merged product was extruded from the second die 70, whereby the tube 1 composed of three layers, that is, the inner layer 10, the intermediate layer 20, and the outer layer 30 (hereinafter referred to as "tube A5") was molded. The inner diameter of the tube A5 was 6 mm, and the thickness of the inner layer 10, the thickness of the intermediate layer 20, and the thickness of the outer layer 30 were 0.3 mm, 0.1 mm, and 0.7 mm, respectively.

### [Comparative Example 1]

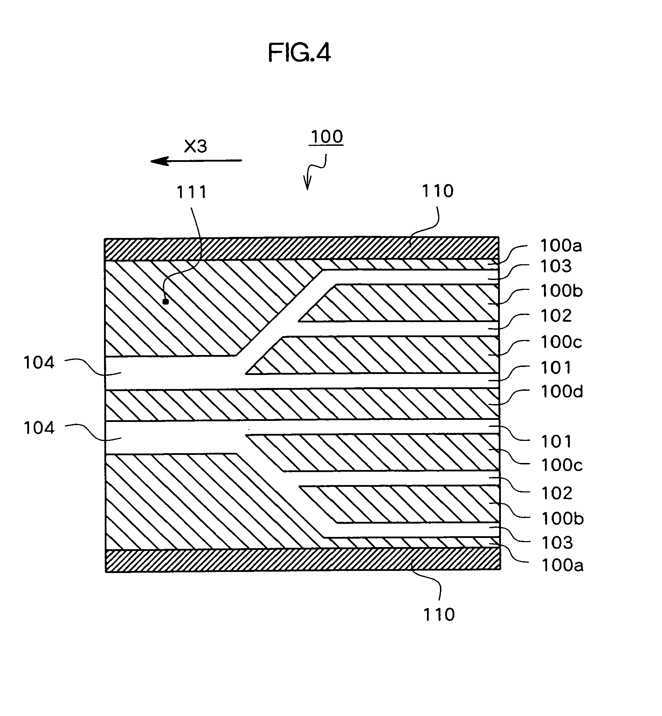

In Comparative Example 1, the second PFA was used alone. In addition, in Comparative Example 1, a die shown in Fig. 4 (hereinafter referred to as "third die 100") was used. The third die 100 has: an outer die 100a; an intermediate die 100b fitted into the outer die 100a in the radial direction of the outer die 100a; an inner die 100c fitted into the intermediate die 100b in the radial direction of the intermediate die 100b; and a mandrel 100d fitted into the inner die 100c in the radial direction of the inner die 100c (that is, the central portion of the third die 100 in the radial direction of the third die 100). In the third die 100, as in the case of the first die 50, an inner layer flow path 101, an intermediate layer flow path 102, and an outer layer flow path 103 which are of concentric cylindrical shapes, and one merging flow path 104 extending in an extrusion direction X3 of the third die 100 (direction X3 indicated by an arrow shown in Fig. 4) from the merging point of these three flow paths are formed.

In addition, the third die 100 has: a heater 110 placed so as to cover the outside of the third die 100 in the radial direction of the third die 100; and a temperature sensor 111 placed at an intermediate portion of the third die 100 between the heater 110 and the merging flow path 104. The heater 110 can heat the entirety of the third die 100 to a desired temperature on the basis of a result of temperature measurement with the sensor 111.

In addition, in Comparative Example 1, first, the pellet of the second PFA was supplied to a cylinder in communication with the inner layer flow path 101 of an extruder provided with the third die 100, and the temperature of the second PFA in the transportation zone of the extruder ranging from the cylinder to the third die 100 was maintained at 380°C. Next, the entirety of the third die 100 was heated with the heater 110 so that the temperature of the third die 100 to be measured with the sensor 111 was 370°C.

The second PFA which had been melted in the inner layer flow path 101 by heating and which had flowed into the merging flow path 104 was extruded from a downstream end in the extrusion direction X3 of the third die 100, whereby a tube composed of a single layer of the second PFA (hereinafter referred to as "tube B1") was molded. The inner diameter of the tube B1 was 6 mm, and the thickness of the layer was 1.0 mm.

### [Comparative Example 2]

In Comparative Example 2, the second PFA was used as the first fluororesin, the adhesive PFA was used as the second fluororesin, and polyamide 12 having a melting point of 176°C and containing 5 mass% of additives (including N-butylbenzenesulfonamide and di-t-butylphenol) (3030JI6L, manufactured by UBE INDUSTRIES, LTD.) (hereinafter referred to as "second polyamide 12") was used as the polyamide-based resin. In addition, in Comparative Example 2, the third die 100 was used. That is, first, the pellet of the second PFA was supplied to a cylinder in communication with the inner layer flow path 101 of a three-layer extruder provided with the third die 100, the pellet of the adhesive PFA was supplied to a cylinder in communication with the intermediate layer flow path 102 of the extruder, and the pellet of the second polyamide 12 was supplied to a cylinder in communication with the outer layer flow path 103 of the extruder. The temperatures of the second PFA, the adhesive PFA, and the second polyamide 12 in the transportation zone of the extruder were maintained at 380°C, 340°C, and 230°C, respectively.

Next, the entirety of the third die 100 was heated with the heater 110 so that the temperature of the third die 100 to be measured with the sensor 111 was 370°C. Then, the second PFA, the adhesive PFA, and the second polyamide 12 each in a molten state were merged in the merging flow path 104. After that, the merged product was extruded from the third die 100, whereby a tube composed of three layers, that is, an inner layer, an intermediate layer, and an outer layer (hereinafter referred to as "tube B2") was molded. The inner diameter of the tube B2 was 6 mm, and the thickness of the inner layer, the thickness of the intermediate layer, and the thickness of the outer layer were 0.3 mm, 0.1 mm, and 0.7 mm, respectively.

### [Comparative Example 3]

In Comparative Example 3, the first PFA was used as the first fluororesin, the adhesive PFA was used as the second fluororesin, and the second polyamide 12 was used as the polyamide-based resin. In addition, in Comparative Example 3, the third die 100 was used. That is, first, the pellet of the first PFA was supplied to a cylinder in communication with the inner layer flow path 101 of a three-layer extruder provided with the third die 100, the pellet of the adhesive PFA was supplied to a cylinder in communication with the intermediate layer flow path 102 of the extruder, and the pellet of the second polyamide 12 was supplied to a cylinder in communication with the outer layer flow path 103 of the extruder. The temperatures of the first PFA, the adhesive PFA, and the second polyamide 12 in the transportation zone of the extruder were maintained at 370°C, 340°C, and 230°C, respectively.

Next, the outer die 100a was heated with the heater 110 so that the temperature of the outer die 100a to be measured with the sensor 111 was 350°C. Then, the first PFA, the adhesive PFA, and the second polyamide 12, each in a molten state, were merged in the merging flow path 104. After that, the merged product was extruded from the third die 100, whereby a tube composed of three layers, that is, an inner layer, an intermediate layer, and an outer layer (hereinafter referred to as "tube B3") was molded. The inner diameter of the tube B3 was 6 mm, and the thickness of the inner layer, the thickness of the intermediate layer, and the thickness of the outer layer were 0.3 mm, 0.1 mm, and 0.7 mm, respectively.

### [Comparative Example 4]

In Comparative Example 4, the first PFA was used as the first fluororesin, the adhesive PFA was used as the second fluororesin, and the first polyamide 12 was used as the polyamide-based resin. In addition, in Comparative Example 4, the third die 100 was used. That is, first, the pellet of the first PFA was supplied to a cylinder in communication with the inner layer flow path 101 of a three-layer extruder provided with the third die 100, the pellet of the adhesive PFA was supplied to a cylinder in communication with the intermediate layer flow path 102 of the extruder, and the pellet of the first polyamide 12 was supplied to a cylinder in communication with the outer layer flow path 103 of the extruder. The temperatures of the first PFA, the adhesive PFA, and the second polyamide 12 in the transportation zone of the extruder were maintained at 370°C, 340°C, and 230°C, respectively.

Next, the outer die 100a was heated with the heater 110 so that the temperature of the outer die 100a to be measured with the sensor 111 was 350°C. Then, the first PFA, the adhesive PFA, and the first polyamide 12, each in a molten state, were merged in the merging flow path 104. After that, the merged product was extruded from the third die 100, whereby a tube composed of three layers, that is, an inner layer, an intermediate layer, and an outer layer (hereinafter referred to as "tube B4") was molded. The inner diameter of the tube B4 was 6 mm, and the thickness of the inner layer, the thickness of the intermediate layer, and the thickness of the outer layer were 0.3 mm, 0.1 mm, and 0.7 mm, respectively.

### [Evaluation of each tube for properties]

The interlayer bonding strength, oxygen permeability coefficient, out-gas amount, and eluted metal amount of each of the tubes A1 to A4 molded in Examples 1 to 4, the tube B1 molded in Comparative Example 1, and the tubes B3 and B4 molded in Comparative Examples 3 and 4 were measured as properties of these tubes.

An interlayer bonding strength was measured by a method with reference to test specifications specified by Japanese Industrial Standards (JIS) (JIS K6854-2: 1999) (180° peel strength test). A product obtained by: cutting and opening each tube in its longitudinal direction; making a slit at an interface between the inner layer and outer layer of the tube (adhesive surface) ; peeling the inner layer; and folding back the inner layer by 180°, was used as a test piece serving as an object to be tested. Then, the test piece was placed in a predetermined testing device, and a load (N) needed for the peeling of the inner layer in the case where the tip portion of the folded inner layer was pulled in the elongated direction of the tip portion was measured. A necessary tensile load (N) per width (cm) of the test piece in the 180° peel strength test was calculated as an interlayer bonding strength (N/cm).

An oxygen permeability coefficient was measured by a method with reference to test specifications specified by JIS (JIS K7126) (differential pressure method). A product obtained by cutting and opening each tube in its longitudinal direction was used as a test piece serving as a measuring object. Then, the test piece was placed in a permeable cell of a predetermined measuring device, and the oxygen permeability coefficient of the test piece was measured under an environment having a primary pressure of 0.3 MPa (oxygen), a temperature of 20°C, and a relative humidity of 50%. That is, a stop valve of the device was opened so that a pressure of 0.3 MPa was applied to one surface side of the test piece. After that, a pressure on the other surface side of the test piece was periodically measured with a pressure detector provided for the device. The oxygen permeability coefficient (mol·m/m²·s·Pa) was calculated as a value for the product of a gas permeability (mol/m²·s·Pa) and the length of the test piece (m). It should be noted that the gas permeability is calculated by multiplying: a value obtained by dividing the volume of a supplied gas at lower pressure side (m³) by a gas constant; a test temperature (K); a pressure difference (Pa) between the lower pressure and higher pressure of the supplied gas (the one surface side and other surface side of the test piece) ; an area (m²) through which the gas permeates; and a variation in pressure (Pa/s) of the gas at lower pressure side per unit time (s).

An out-gas amount was measured with a purge and trap analyzer (JHS-100A, manufactured by Japan Analytical Industry Co., Ltd.) and a gas chromatographic analyzer (Automass sun, manufactured by JEOL Ltd.) by purge and trap gas chromatographic mass spectrometry (P & T-GC/MS). A product cut from part of each molded tube was used as a test piece serving as a measuring object. Then, the test piece was placed in the purge and trap analyzer, an adsorbent was cooled to - 40°C, and the test piece was heated at 100°C for 30 minutes, whereby an out-gas component released from the test piece in association with the heating was trapped with the adsorbent. After that, the adsorbent was heated at 358°C for 20 seconds, whereby the trapped out-gas component was released, and the released out-gas component was analyzed with the gas chromatographic analyzer.

An eluted metal amount was calculated by: leaving a tube serving as a measuring object to stand in 3.6% hydrochloric acid (prepared by diluting 36% hydrochloric acid (for the electronic industry, manufactured by KANTO KAGAKU Co., Ltd.) with ultrapure water) at room temperature for 20 hours; and measuring an eluted metal amount in hydrochloric acid. To be specific, the amount of sodium, magnesium, aluminum, potassium, calcium, chromium, iron, nickel, copper, zinc, cadmium, or lead in 3.6% hydrochloric acid was measured by inductively coupled plasma mass spectrometry (ICP-MS) involving the use of a device for quantitation (Agilent 7500S, manufactured by Yokogawa Analytical Systems Inc.).

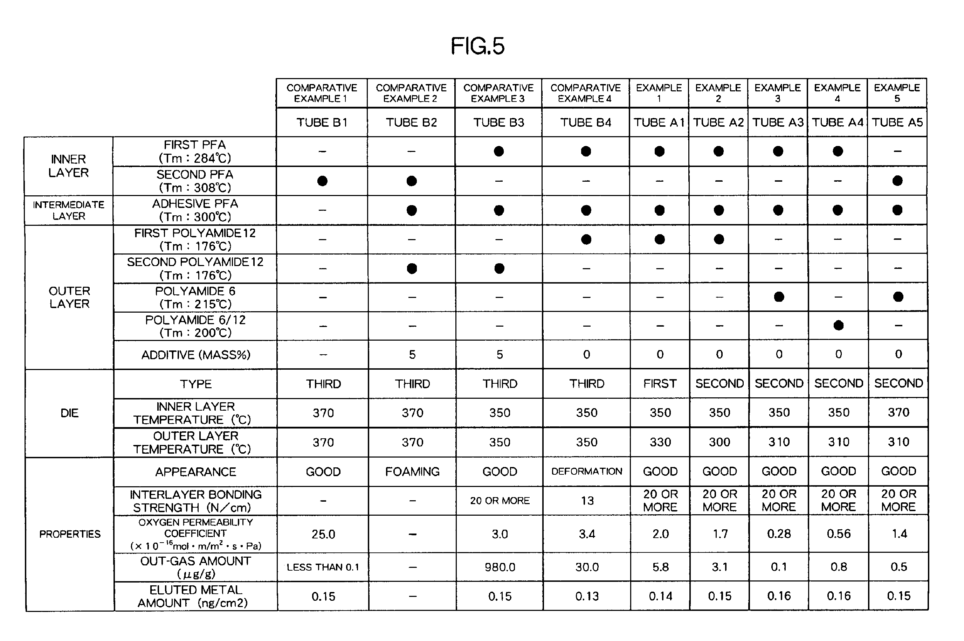

Fig. 5 shows the composition of each of the tubes obtained in Examples 1 to 4 and Comparative Examples 1 to 4 described above, die conditions adopted for the molding of each of the tubes, and the measured properties of each of the tubes.

In each of Comparative Examples 1 to 4, the first fluororesin, the second fluororesin, and the polyamide-based resin were subjected to co-extrusion molding with the third die 100 in a state where each of the resins was heated to a temperature suitable for the melt extrusion of the first fluororesin.

In Comparative Example 1, good molding of the monolayer tube B1 composed of the second PFA was attained. However, the tube B1 showed an oxygen permeability coefficient as large as 2.5 x 10⁻¹⁵ mol·m/m²·s·Pa, so the tube was poor in gas barrier property. Accordingly, the tube B1 was not suitable as piping for transporting, for example, a chemical solution in a device for producing a semiconductor or liquid crystal display. On the other hand, the tube B1 showed an out-gas amount of less than 0.1 µg/g and an eluted metal amount of 0. 15 ng/cm², so the tube was provided with extremely excellent cleanness.

In Comparative Example 2, foaming occurred mainly in the layer of the second polyamide 12 during the process for the molding of the tube B2, so the tube could not be evaluated for properties such as an oxygen permeability coefficient. This was considered to result from a large difference between the temperature to which each resin was heated and which was suitable for the melting of the second PFA (370°C) and the melting point of the second polyamide 12 (176°C).

In Comparative Example 3, the first PFA having a melting point lower than that of the second PFA was used as the first fluororesin, and the temperature to which the die was heated was reduced to 350°C suitable for the melting of the first PFA. As a result, good molding of the tube B3 was attained without the occurrence of foaming, unlike in Comparative Example 2.

However, the tube B3 showed an extremely large out-gas amount, specifically, 980 µg/g, so the tube had remarkably low cleanness. The generation of the large amount of the out-gas was considered to result from: additives included in the second polyamide 12 of which the outer layer was formed; and a thermally decomposed product of the second polyamide 12 due to heating. Accordingly, the tube B3 was not suitable as piping for transporting, for example, a chemical solution in a device for producing a semiconductor or liquid crystal display. It should be noted that the tube B3 showed an interlayer bonding strength that exceeded a measurable upper limit of 20 N/cm, an oxygen permeability coefficient of 3.0 x 10⁻¹⁶ mol·m/m²·s·Pa, and an eluted metal amount of 0.15 ng/cm².

In Comparative Example 4, the first polyamide 12 free of an additive was used as the polyamide-based resin. However, the fluidity of the first polyamide 12 increased remarkably (that is, the viscosity of the polyamide reduced) at the temperature to which each resin was heated and which was suitable for the melting of the first PFA (350°C), so the moldability of the polyamide reduced remarkably. As a result, the molded tube B4 could not maintain its complete circular sectional shape, and largely deformed.

In addition, the tube B4 showed an out-gas amount of 30 µg/g, so the cleanness of the tube could not be said to be sufficient for the tube to be suitable as piping for transporting, for example, a chemical solution in a device for producing a semiconductor or liquid crystal display. It should be noted that the out-gas of the tube B4 was considered to result mainly from a thermally decomposed product of the first polyamide 12 due to heating.

In addition, the tube B4 showed an interlayer bonding strength of 13 N/cm. This means that adhesiveness between layers was relatively low. This was considered to result from a reduction in moldability of the first polyamide 12 in the molding process. In addition, the tube B4 showed an oxygen permeability coefficient of 3.4 x 10⁻¹⁶ mol·m/m²·s·Pa and an eluted metal amount of 0.13 ng/cm².

In each of Examples 1 to 4, the first fluororesin, the second fluororesin, and the polyamide-based resin were subjected to co-extrusion molding with the first or second die while the moldability of each of the resins was maintained at a good level.

In Example 1, the first die 50 was used, and the first polyamide 12 was maintained at a temperature suitable for the melt extrusion of the first polyamide 12 (330°C) while the first PFA was maintained at a temperature suitable for the melt extrusion of the first PFA (350°C).

As a result, good molding of the tube A1 was attained without causing the deformation of the tube, unlike in Comparative Example 4. Further, the out-gas amount of the tube A1 was reduced to one fifth or less of that of the tube B4 obtained in Comparative Example 4; the tube A1 showed an out-gas amount of 5.8 µg/g. In addition, the tube A1 showed an interlayer bonding strength of 20 N/cm or more, which was higher than that of the tube B4, so good bonding between layers was also attained. This was considered to result from the following facts: the temperature of the first PFA and the temperature of the first polyamide 12 were each independently controlled, whereby not only the maintenance of the moldability of the first polyamide 12 at a good level, but also the effective suppression of the thermal decomposition of the first polyamide 12, were attained. In addition, the tube A1 showed an oxygen permeability coefficient of 2.0 x 10⁻¹⁶ mol·m/m²·s·Pa and an eluted metal amount of 0.14 ng/cm². That is, the tube A1 was excellent in gas barrier property and cleanness.

In Example 2, the second die 70 was used, and the first polyamide 12 was maintained at a temperature suitable for the melt extrusion of the first polyamide 12 and lower than that in Example 1 (300°C) while the first PFA was maintained at a temperature suitable for the melt extrusion of the first PFA (350°C).

As a result, the out-gas amount of the tube A2 was reduced to be lower than that of the tube A1 obtained in Example 1; the tube A2 showed an out-gas amount of 3.1 µg/g. This was considered to result from the following fact: a temperature difference between the temperature to which the first polyamide was heated and the melting point of the first polyamide was additionally reduced, whereby additionally effective suppression of the thermal decomposition of the first polyamide 12 was attained. In addition, the tube A2 showed an interlayer bonding strength of 20 N/cm or more, an oxygen permeability coefficient of 1.7 x 10⁻¹⁶ mol·m/m²·s·Pa, and an eluted metal amount of 0.15 ng/cm². That is, the tube A2 was also excellent in gas barrier property and cleanness.

In Example 3, the second die 70 was used, and the polyamide 6 was maintained at a temperature suitable for the melt extrusion of polyamide 6 (310°C) while the first PFA was maintained at a temperature suitable for the melt extrusion of the first PFA (350°C).

As a result, the out-gas amount of the tube A3 was significantly reduced compared to those of the tube A1 obtained in Example 1 and the tube A2 obtained in Example 2; and the tube A3 showed an out-gas amount of 0.1 µg/g, which was comparable to that of the tube B1 composed of a single layer of the second PFA obtained in Comparative Example 1. In addition, the oxygen permeability coefficient of the tube A3 was largely reduced compared to those of the tubes A1 and A2; the tube A3 showed an oxygen permeability coefficient of 2.8 x 10⁻¹⁷ mol·m/m²·s·Pa. In addition, the tube A3 showed an interlayer bonding strength of 20 N/cm or more and an eluted metal amount of 0.16 ng/cm². The excellent gas barrier property and excellent cleanness of the tube A3 as described above were considered to result from the adoption of the polyamide 6 to the outer layer 30.

In Example 4, the second die 70 was used, and the polyamide 6/12 copolymer was maintained at a temperature suitable for the melt extrusion of the polyamide 6/12 copolymer (310°C) while the first PFA was maintained at a temperature suitable for the melt extrusion of the first PFA (350°C).

As a result, the out-gas amount of the tube A4 was significantly reduced compared to those of the tube A1 obtained in Example 1 and the tube A2 obtained in Example 2; the tube A4 showed an out-gas amount of 0.8 µg/g. In addition, the oxygen permeability coefficient of the tube A4 was largely reduced compared to those of the tubes A1 and A2; the tube A4 showed an oxygen permeability coefficient of 5. 6 x 10⁻¹⁷ mol·m/m²·s·Pa. In addition, the tube A4 showed an interlayer bonding strength of 20 N/cm or more and an eluted metal amount of 0.16 ng/cm². The excellent gas barrier property and excellent cleanness of the tube A4 as described above were considered to result from the adoption of the polyamide 6 having copolymer to the outer layer 30.

In Example 5, the second die 70 was used, and the polyamide 6 was maintained at a temperature suitable for the melt extrusion of the polyamide 6 (310°C) while the second PFA was maintained at a temperature suitable for the melt extrusion of the second PFA (370°C).

As a result, the out-gas amount of the tube A5 was significantly reduced compared to those of the tube A1 obtained in Example 1 and the tube A2 obtained in Example 2; the tube A5 showed an out-gas amount of 0.5 µg/g. In addition, the oxygen permeability coefficient of the tube A5 was substantially equal to those of the tubes A1 and A2; the tube A5 showed an oxygen permeability coefficient of 1.4 x 10⁻¹⁶mol·m/m²·s·Pa. In addition, the tube A4 showed an interlayer bonding strength of 20 N/cm or more and an eluted metal amount of 0.15 ng/cm². The excellent gas barrier property and excellent cleanness of the tube A5 as described above were considered to result from the adoption of the polyamide 6 to the outer layer 30.

As described above, layers were strongly bonded to each other in each of the tubes A1 to A5 obtained in Examples 1 to 5, and each of the tubes was excellent in each of chemical resistance, gas barrier property, and cleanness. Accordingly, each of the tubes was suitable as piping for, for example, functional water or a chemical solution in a device for producing, for example, a semiconductor or liquid crystal display.

It should be noted that the multilayer tube according to the present invention is not limited to the above-mentioned examples. That is, the multilayer tube according to the present invention is not limited to one having such a three-layer structure as described above, and may be, for example, one having a two-layer structure composed of a first layer composed of a fluororesin and a second layer covering one surface of the first layer and composed of a polyamide-based resin free of an additive. Even in this case, the fluororesin to be used in the above-mentioned inner layer 10 can be used as a fluororesin for the first layer, and the fluororesin having an acid anhydride group to be used in the above-mentioned intermediate layer 20 can be used as the fluororesin for the first layer. Further, for example, a fluorine-containing copolymer which contains a first repeating unit based on tetrafluoroethylene, a second repeating unit based on a cyclic hydrocarbon monomer having a dicarboxylic anhydride group and having, in its ring, a polymerizable unsaturated group, and a third repeating unit based on a monomer except tetrafluoroethylene and the cyclic hydrocarbon monomer and in which the first repeating unit accounts for 50 to 99.89 mol%, the second repeating unit accounts for 0.01 to 5 mol%, and the third repeating unit accounts for 0.1 to 49.99 mol% with respect to the total molar amount of the first repeating unit, the second repeating unit, and the third repeating unit, can be preferably used as such a fluororesin having an acid anhydride group.

## Claims

1. A multilayer tube(1), comprising:
a first layer(10) composed of a fluororesin; and
a second layer(30) covering one surface of the first layer and composed of a polyamide-based resin free of an additive.

2. A multilayer tube(1) according to claim 1, wherein the fluororesin contains at least one selected from the group consisting of a tetrafluoroethylene-perfluoroalkylvinylether copolymer (PFA) having a fluorinated terminal group, an ethylene-tetrafluoroethylene-based copolymer (ETFE), a tetrafluoroethylene-hexafluoropropylene-based copolymer (FEP), and a chlorotrifluoroethylene-tetrafluoroethylene-based copolymer.

3. A multilayer tube(1) according to claim 1 or 2, wherein the polyamide-based resin contains at least one selected from the group consisting of polyamide 6, polyamide 12, and a polyamide 6/polyamide 12 copolymer.

4. A multilayer tube(1) according to any one of claims 1 to 3, wherein the first layer (10) and the second layer (30) are bonded to each other through an intermediate layer(20) composed of a fluororesin having at least one functional group selected from the group consisting of an acid anhydride group, a carboxy group, an acyl halide group, and a carbonate group.

5. A multilayer tube (1) according to any one of claims 1 to 3, wherein the first layer (10) and the second layer (30) are bonded to each other through an intermediate layer(20) composed of a fluororesin having an acid anhydride group.

6. A multilayer tube(1) according to claim 5, wherein the fluororesin having an acid anhydride group comprises a fluorine-containing copolymer which contains a first repeating unit based on tetrafluoroethylene, a second repeating unit based on a cyclic hydrocarbon monomer having a dicarboxylic anhydride group and having, in its ring, a polymerizable unsaturated group, and a third repeating unit based on a monomer except tetrafluoroethylene and the cyclic hydrocarbon monomer and in which the first repeating unit accounts for 50 to 99.89 mol%, the second repeating unit accounts for 0.01 to 5 mol%, and the third repeating unit accounts for 0.1 to 49.99 mol% with respect to a total molar amount of the first repeating unit, the second repeating unit, and the third repeating unit.

7. A multilayer tube (1) according to any one of claims 1 to 6, wherein the multilayer tube (1) has an oxygen permeability coefficient of 2.0 x 10⁻¹⁶ mol·m/m²·s·Pa or less.

8. A multilayer tube(1) according to any one of claims 1 to 7, wherein the multilayer tube (1) generates an out-gas in an amount of 10 µg/g or less by heating at 100°C for 30 minutes.

9. A multilayer tube(1) according to any one of claims 1 to 8, wherein the multilayer tube (1) comprises a cylindrical structure molded by co-extrusion.

10. A multilayer tube (1) according to any one of claims 1 to 9, wherein the multilayer tube (1) is used for chemical solution piping in a device for producing one of a semiconductor and liquid crystal display.
